# EUROPEAN PATENT SPECIFICATION

(11) **EP 1 230 151 B1**
(45) Date of publication and mention of the grant of the patent: **29.08.2007**
(21) Application number: 00974692.6
(22) Date of filing: 10.11.2000
(51) Int. Cl.: C01B 25/00, B01D 9/00

(54) **REMOVAL OF MELTABLE SOLIDS FROM MIXTURES WITH OTHER SOLIDS**
ENTFERNUNG VON SCHMELZBAREN FESTSTOFFEN AUS MISCHUNGEN MIT ANDEREN FESTSTOFFEN
ELIMINATION DE SOLIDES FUSIBLES DE MELANGES RENFERMANT D'AUTRES SOLIDES

(30) Priority: 19.11.1999 US 443589
(43) Date of publication of application: 14.08.2002
(73) Proprietor: Glenn Springs Holding, INC, Lexington, KY 40507 (US)
(72) Inventor: STURDIVAN, Charles, N., Nashville, TN 37221 (US); LUXBACHER, George, Walter, Lexington, KY 40513 (US); SARAN, Mohan, Singh, Grand Island, NY 14072 (US); PRICE, Kenneth, Raburn, Nicholasville, KY 40356 (US)
(74) Representative: Barton, Matthew Thomas
(86) International application number: PCT/GB2000/004331
(87) International publication number: WO 2001/036325

(56) References cited:
- DE-A- 2 014 613
- GB-A- 486 676
- US-A- 2 090 667

## Description

This invention relates to a method for separating elemental phosphorus from phosphorus bearing sludges by melting the phosphorus in the sludge inside a screened container.

In processing phosphate rock to obtain phosphorus for use in making fertilizers, detergents, and other products, vast quantities of unuseable sludge is also produced. Since this sludge contains elemental phosphorus, it must be stored in ponds to prevent the spontaneous ignition of the phosphorus in air. Maintaining the ponds is costly, creates legal and environmental problems, and is a loss of valuable phosphorus.

The phosphorus in the ponds can be recovered using mobile sumps - large, open-bottomed tubes. The sumps are forced down into the pond sediment and steam is sparged into the sediment inside the sump, melting the phosphorus. The sediment is pumped out of the sump and the melted phosphorus is separated from the remaining solids by gravity settling and filtration.

According to this invention there is provided a method of separating elemental phosphorus from a mixture with other solids utilising a separator comprising:
(A) a tank holding a liquid;
(B) a container, in the form of a cylinder, inside said tank, having a screen portion through which said liquid can pass and melted solid can flow, but through which unmelted solid material cannot pass, the cylinder being at least partly immersed in said liquid, with any portion of the cylinder not immersed in said liquid being in an inert atmosphere; and
(C) a heater for heating said liquid above the melting point of phosphorus,
   the method comprising the steps of:
(D) placing said mixture in said container of the separator, and
(E) heating said liquid to a temperature above 44.1°C, whereby phosphorus melts and flows through said screen out of said container and unmelted solids do not,
wherein the screen portion has openings which become larger or smaller along the length of the cylinder, a plurality of cones being provided, in a series along the cylinder, below the latter, into which melted phosphorus flowing through the openings in the screened portion can collect, the method comprising the step of rotating said cylinder about its axis, the axis of the cylinder being at an angle α to the horizontal of up to 5 degrees and/or a screw flight being provided on the inside of the cylinder to convey unmelted solid material along said cylinder on rotation thereof.

Preferably the openings in said screen have a diameter of about 0.2 to about 0.6 cm.

Advantageously the cylinder has a diameter of about 0.6 to about 2.4m and a length of about 3.7 to about 12m.

Preferably the cylinder is rotated about its axis at less than about 10 rpm.

Conveniently the angle α of the axis of the cylinder is adjustable.

In order that the invention may be more readily understood, and so that further features thereof may be appreciated, the invention will now be described, by way of example.

A separator according to this invention has a tank in which is placed a horizontal cylindrical container having a screened portion. The tank is filled to level with a liquid such as water, which can be heated by means of heater. The axis of container is at an adjustable angle α to the horizontal. Container can be rotated about its axis by means, such as an electric, hydraulic, or air motor, or an engine. Sludge, sediment, or other mixtures of solids can be admitted to the inside of container through input. (An annular solid ring over that end of container prevents material from spilling out.) Melted solids flow through the openings in screened portion of container and collect in cones, which can be opened using valves. Unmelted solids gradually tumble down container and are removed by means of dewatering screw conveyer.

This invention can be used to treat, for example, any mixtures of elemental phosphorus in phosphorus sludge and hydrocarbons in petrochemical sludge. The mixture may contain elemental phosphorus and various high melting or infusible solids. For example, the phosphorus can be in a mixture with dirt, furnace slag, rock, sand, clay, and debris. Water is usually also present to keep the phosphorus from spontaneously igniting. A typical mixture from the production of elemental phosphorus from phosphate rock contains about 1 to about 40 wt% elemental phosphorus.

The screened container can have any shape suitable for holding unmelted solids while permitting melted solids to escape. A cylindrical shape is preferred as a cylinder is self-cleaning. The cylinder can be made of many flat panels for better mixing and easier repair. The axis of the cylinder is preferably at an angle α of between about 0 and about 5 degrees to the horizontal, so that solids move down the cylinder as it rotates. Alternatively, the cylinder can be fitted with screw flights, which will move material along the cylinder as it is rotated. The cylinder can have any dimensions, but a cylinder about 0.6 to about 2.4 m (about 2 to about 8 feet) in diameter and about 3.7 to about 12 m (about 10 to about 40 feet) long is practical for many materials. The cylinder can be made of a variety of materials, including aluminum and various plastics; steel is the preferred material due to its strength and durability.

At least some portion of the container is screened (where the melted solid is to flow out) but other portions can be unscreened to provide mechanical support or for other reasons. The openings in the screened portion should be large enough that they do not plug frequently but small enough to minimize the size of the solid particles that pass through and must be handled by the downstream equipment. A practical range for many types of materials is about 0.2 to about 0.6 cm (about 0.06 to about 0.25 inches) in diameter. The openings in the screened portion can become larger or smaller along the length of the cylinder so that the distribution of the melted phosphorus and inert solids to the various cones is controlled.

The container is preferably rotated or otherwise agitated to aid in separating the melted solids from the unmelted solids. To minimize splashing, wear, and vibration, the container is preferably rotated at less than 10 rpm. It can also be vibrated, but this is generally not necessary. The container is at least partially immersed in the liquid in the tank; any portion not immersed is in an inert atmosphere to prevent the spontaneous ignition of the phosphorus.

The mixture is heated to a temperature above the melting point of phosphorus, but below the melting point of any solids or solids that are not to be separated. Thus the mixture should be heated to about 50°C as elemental phosphorus melts at 44.1°C. Heating is most conveniently accomplished by placing the screened container in a bath of a hot fluid. While the fluid can be an inert gas, such as carbon dioxide or nitrogen, it is preferably a liquid, such as water or an organic solvent, e.g., methanol, or toluene. The liquid is preferably water as it is inexpensive, non-toxic, and easy to work with. If a heavy liquid such as brine is used, the phosphorus will float out of the container instead of sinking to the bottom.

The mixture can be added to the screened container either in batches or continuously, but continuous addition and removal of the meltable solid is preferred as processing is easier, more efficient, and more economical. It is also possible to heat the mixture in one step, melting the meltable solid, then place the mixture into the screened container for separation in a separate step, but this is not preferred.

In the present specification "comprise" means "includes or consists of" and "comprising" means "including or consisting of".

## Claims

1. A method of separating elemental phosphorus from a mixture with other solids utilising a separator comprising:
(A) a tank holding a liquid;
(B) a container, in the form of a cylinder, inside said tank, having a screen portion through which said liquid can pass and melted solid can flow, but through which unmelted solid material cannot pass, the cylinder being at least partly immersed in said liquid, with any portion of the cylinder not immersed in said liquid being in an inert atmosphere; and
(C) a heater for heating said liquid above the melting point of phosphorus,
the method comprising the steps of:
(D) placing said mixture in said container of the separator, and
(E) heating said liquid to a temperature above 44.1°C, whereby phosphorus melts and flows through said screen out of said container and unmelted solids do not,
wherein the screen portion has openings which become larger or smaller along the length of the cylinder, a plurality of cones being provided, in a series along the cylinder, below the latter, into which melted phosphorus flowing through the openings in the screened portion can collect, the method comprising the step of rotating said cylinder about its axis, the axis of the cylinder being at an angle α to the horizontal of up to 5 degrees and/or a screw flight being provided on the inside of the cylinder to convey unmelted solid material along said cylinder on rotation thereof.

2. A method according to Claim 1 wherein the openings in said screen have a diameter of about 0.2 to about 0.6 cm.

3. A method according to Claim 1 or Claim 2 wherein the cylinder has a diameter of about 0.6 to about 2.4m and a length of about 3.7 to about 12m.

4. A method according to Claim 6 wherein the cylinder is rotated about its axis at less than about 10 rpm.

5. A method according to any one of the preceding Claims wherein the angle α of the axis of the cylinder is adjustable.

## Patentansprüche

1. Verfahren zum Abtrennen von elementarem Phosphor aus einer Mischung mit anderen Feststoffen unter Verwendung einer Trennvorrichtung, welche umfaßt:
(A) einen Tank, der eine Flüssigkeit enthält;
(B) einen Behälter, in der form eines Zylinders, innerhalb besagten Tanks, der einen Siebabschnitt aufweist, durch den besagte Flüssigkeit hindurchgehen und geschmolzener Feststoff hindurchfließen kann, aber durch den nicht-geschmolzenes festes Material nicht hindurchgehen kann, wobei der Zylinder wenigstens teilweise in besagter Flüssigkeit eingetaucht ist, wobei jeder Abschnitt des Zylinders, der nicht in besagter Flüssigkeit eingetaucht ist, sich in einer inerten Atmosphäre befindet ; und
(C) eine Heizvorrichtung zum Erhitzen besagter Flüssigkeit oberhalb des Schmelzpunktes von Phosphor,
wobei das Verfahren die Schritte umfaßt ;
(D) Plazieren besagter Mischung in besagtem Behälter der Trennvorrichtung und
(E) Erhitzen besagter Flüssigkeit auf eine Temperatur oberhalb 44,1°C, wodurch Phosphor schmilzt und durch besagtes Sieb aus besagtem Behälter herausfließt und nicht-geschmolzene Feststoffe dies nicht tun,
wobei der Siebabschnitt Öffnungen aufweist, die entlang der Länge des Zylinders großer oder kleiner werden, wobei eine Mehrzahl von Bunkern vorgesehen sind, in einer Reihe entlang des Zylinders, unterhalb des letzteren, in die hinein geschmolzener Phosphor, der durch die Öffnungen im Siebabschnitt fließt, gesammelt werden kann, wobei das Verfahren den Schritt des Drehens besagten Zylinders um seine Achse umfaßt, wobei die Achse des Zylinders in einem Winkel α zur Horizontalen von bis zu 5° steht, und/oder eine Schnecke auf der Innenseite des Zylinders vorgesehen ist, um nicht-geschmolzenes festes Material entlang besagten Zylinders bei Drehung desselben zu fördern.

2. Verfahren nach Anspruch 1, **dadurch gekennzeichnet, daß** die Öffnungen in besagtem Sieb einen Durchmesser von etwa 0,2 bis 0,6 cm aufweisen.

3. Verfahren nach Anspruch 1 oder Anspruch 2, **dadurch gekennzeichnet, daß** der Zylinder einen Durchmesser von etwa 0,6 bis etwa 2,4 m und eine Länge von etwa 3,7 bis etwa 12 m aufweist.

4. Verfahren nach Anspruch 1, **dadurch gekennzeichnet, daß** der Zylinder mit weniger als etwa 10 UPM um seine Achse gedreht wird.

5. Verfahren nach einem der vorangehenden Ansprüche, **dadurch gekennzeichnet, daß** der Winkel α der Achse des Zylinders einstellbar ist.

## Revendications

1. Procédé de séparation de phosphore élémentaire à partir d'un mélange ayant d'autres matières solides en utilisant un séparateur comprenant :
(A) un réservoir contenant un liquide ;
(B) un conteneur, sous la forme d'un cylindre, à l'intérieur dudit réservoir, ayant une partie de tamis à travers laquelle ledit liquide peut passer et de la matière fondue peut s'écouler, mais à travers laquelle de la matière solide non fondue ne peut pas passer, le cylindre étant au moins partiellement immergé dans ledit liquide, avec toute partie du cylindre non immergée dans ledit liquide qui est dans une atmosphère inerte ; et
(C) un dispositif de chauffage pour chauffer ledit liquide au-dessus du point de fusion du phosphore et,
le procédé comprenant les étapes de :
(D) placer ledit mélange dans ledit conteneur du séparateur, et
(E) chauffer ledit liquide à une température au-dessus de 44,1 °C, grâce à quoi le phosphore fond et s'écoule à travers ledit tamis hors dudit conteneur et non les matières solides non fondues,
dans lequel la partie de tamis présente des ouvertures qui deviennent plus grandes ou plus petites sur la longueur du cylindre, une pluralité de cônes étant prévus, selon une série le long du cylindre, en bas de ce dernier, dans lesquels le phosphore fondu s'écoulant à travers les ouvertures dans la partie de crible peut être recueilli, le procédé comprenant l'étape de faire tourner ledit cylindre autour de son axe, l'axe du cylindre formant un angle α par rapport à l'horizontale jusqu'à 5 degrés et/ou une vis sans fin étant prévue à l'intérieur du cylindre pour transporter la matière solide non fondue le long dudit cylindre lors de sa rotation.

2. Procédé selon la revendication 1, dans lequel les ouvertures dans ledit tamis ont un diamètre d'environ 0,2 à environ 0,6 cm.

3. Procédé selon la revendication 1 ou la revendication 2, dans lequel le cylindre a une diamètre d'environ 0,6 à environ 2,4 m et une longueur d'environ 3,7 à environ 12 m.

4. Procédé selon la revendication 6, dans lequel le cylindre tourne autour de son axe à une vitesse inférieure à environ 10 tr/mn.

5. Procédé selon une quelconque des revendications précédentes, dans lequel l'angle a de l'axe du cylindre est réglable.
